# EUROPÄISCHE PATENTSCHRIFT

(11) **EP 1 317 864 B1**
(45) Veröffentlichungstag und Bekanntmachung des Hinweises auf die Patenterteilung: **04.02.2004**
(21) Anmeldenummer: 01962642.3
(22) Anmeldetag: 16.08.2001
(51) Int. Cl.: H04Q 7/32

(54) **KOMMUNIKATIONSEINRICHTUNG EINES KRAFTFAHRZEUGES UND VERFAHREN ZUR HERSTELLUNG EINER RUFUMLEITUNG**
COMMUNICATIONS DEVICE OF A MOTOR VEHICLE AND METHOD FOR REDIRECTING CALLS
DISPOSITIF DE COMMUNICATION POUR AUTOMOBILE ET PROCEDE DE REALISATION D'UN RENVOI D'APPEL

(30) Priorität: 12.09.2000 DE 10045303
(43) Veröffentlichungstag der Anmeldung: 11.06.2003
(73) Patentinhaber: SIEMENS AKTIENGESELLSCHAFT, 80333 München (DE)
(72) Erfinder: TILGNER, Rainer, 71686 Remseck (DE); FRANK, Bernard, 85570 Markt Schwaben (DE); GABLER, Dietrich, 63500 Seligenstadt (DE); SCHEIDL, Wolfgang, 93170 Bernhardswald (DE); HAIN, Ronald, 90522 Oberasbach (DE); KLEIN, Bernhard, 93186 Pettendorf (DE)
(86) Internationale Anmeldenummer: PCT/DE2001/003131
(87) Internationale Veröffentlichungsnummer: WO 2002/023933

(56) Entgegenhaltungen:
- EP-A- 1 111 886
- WO-A-00/18152
- WO-A-99/30422
- DE-A- 3 528 886
- DE-A- 3 843 870

## Beschreibung

Die Erfindung betrifft eine Kommunikationseinrichtung eines Kraftfahrzeuges mit einer Eingabeeinheit und einer akustischen Ausgabeeinheit, die mit einer Steuereinheit verbunden sind, sowie einen mit der Steuereinheit verbundenen Mobilfunkmodul eines zellularen Mobilfunksystems. Weiterhin betrifft die Erfindung ein Kommunikationssystem mit einer in einem Fahrzeug integrierten Kommunikationseinrichtung und einem externen Mobilfunk gerät eines zellularen Mobilfunksystems. Weiterhin betrifft die Erfindung ein Verfahren zur Herstellung einer interaktiven Rufumleitung zwischen einem ersten und einem zweiten Mobilfunkgerät eines zellularen Mobilfunksystems.

Als Kommunikationseinrichtung eines Kraftfahrzeuges kam in der Vergangenheit vorwiegend das klassische Autotelefon zum Einsatz. Hierbei handelt es sich um ein fest in das Fahrzeug eingebautes Mobilfunktelefon, das entweder über einen Handapparat oder eine Freisprecheinrichtung bedient werden kann. Es ist auch bereits bekannt ein solches Autotelefon in ein Audiogerät eines Kraftfahrzeuges zu integrieren. Ein derartiges Gerät beinhaltet dann beispielsweise ein klassisches Radiogerät, ein CD-Abspielgerät und das Autoradio, wobei das Gesamtgerät die Größe eines herkömmlichen Autoradios nicht übersteigt und in den in Fahrzeugen vorhandenen DIN-Schacht eingebaut werden kann. Bei einer solchen Ausführungsform werden die Lautsprecher des Audiogerätes für die Gesprächsausgabe mit verwendet. Durch ein zusätzlich in das Gerät integriertes Mikrophon wird eine Freisprechfunktion realisiert. Nachteilig bei einem solchen System ist, dass es nur innerhalb des Fahrzeuges benutzt werden kann und der Fahrer über eine eigene Telefonnummer nur innerhalb des Fahrzeuges erreichbar ist. Nachteilig sind zudem die vergleichsweise hohen Kosten für ein Telefon, dessen Nutzungsbereich auf das Auto beschränkt ist.

Aus der WO-A-99/30422 ist ein in ein Autoradio eingebautes Funkmodul nach dem GSM-Standard bekannt, welches sich über eine Infrarotschnittstelle mit einem externen Mobiltelefon verbinden läßt.

Weiterhin sind sogenannte Telematik-Systeme bekannt, wie beispielsweise das in auto, motor, sport 7/1999, S. 140-142 beschriebene ADAC-Telematik Service-Kit. Dieses beinhaltet eine Telematik-Steuereinheit mit einem Bedienteil und einem GPS-Empfänger zur genauen Positionsbestimmung des Fahrzeuges durch die Auswertung von Satellitennavigationssignalen. Die Telematik-Steuereinheit wird mit einem separaten Mobilfunktelefon verbunden. Über die Mobilfunkverbindung stehen dann Notfall- und Pannenhilfefunktionen zur Verfügung. Zudem können Verkehrsinformationen eingeholt werden. Die integrierte Freisprecheinrichtung gestattet dabei auch eine Benutzung während der Fahrt.

Aus der nicht vorveröffentlichten deutschen Patentanmeldung 199 21 533.2 der Anmelderin ist ein Kommunikationssystem eines Kraftfahrzeuges bekannt, das aus einem Autoradio und einem Mobilfunktelefon besteht. Sowohl in das Autoradio als auch in das Mobilfunktelefon ist eine Kurzstreckenfunkeinrichtung integriert, über die automatisch eine Verbindung zwischen dem Autoradio und dem Mobilfunktelefon herstellbar ist, wobei das Autoradio die Funktion einer Freisprecheinrichtung für das Mobilfunktelefon übernimmt. Sowohl bei diesem System als auch bei dem zuvor beschriebenen Telematik-System ist es von Nachteil, dass fahrzeugspezifische Funktionen wie beispielsweise ein Notruf oder die Anforderung von Pannenhilfe oder Verkehrsinformationen nur dann möglich ist, wenn ein externes Mobilfunktelefon mit in das Fahrzeug gebracht wird.

Eine erste Aufgabe der Erfindung besteht darin, eine Kommunikationseinrichtung eines Kraftfahrzeuges anzugeben, die auch zusammen mit einem oder mehreren externen Mobilfunkgeräten genutzt werden kann, insbesondere als Freisprecheinrichtung, und dabei insbesondere bei der Nutzung eines Fahrzeuges durch verschiedene Nutzer eine nutzerspezifische Kostenabrechnung erlaubt, gleichzeitig jedoch benutzerunabhängig gewisse mit dem Betrieb eines Kraftfahrzeugs zusammenhängende Funktionen gestattet. Eine weitere Aufgabe der Erfindung besteht darin, ein Kommunikationssystem, eines Kraftfahrzeuges anzugeben, das eine in ein Kraftfahrzeug integrierte Kommunikationseinrichtung sowie ein externes Mobilfunkgerät beinhaltet und die vorgenannte Funktionalität aufweist. Eine dritte Aufgabe der Erfindung besteht darin, ein Verfahren zur Herstellung einer interaktiven Rufumleitung zwischen einem ersten und einem zweiten Mobilfunkgerät eines zellularen Mobilfunksystems anzugeben, das insbesondere zum Einsatz in dem vorgenannten Kommunikationssystem geeignet ist.

Die erstgenannte Aufgabe wird bei einer gattungsgemäßen Kommunikationseinrichtung dadurch gelöst, dass die Kommunikationseinrichtung eine mit einer Steuereinheit verbundene Kurzstreckenfunkeinrichtung aufweist, wobei die Kurzstreckenfunkeinrichtung zum Datenaustausch über eine Kurzstreckenfunkverbindung ausgelegt ist, die Kommunikationseinrichtung ein Vergleichsmodul zum Vergleichen von über die Kurzstreckenfunkverbindung empfangenen Daten mit in einem Speicherelement abgespeicherten Daten aufweist und bei Übereinstimmung von empfangenen und abgespeicherten Daten hinsichtlich vorgegebener Merkmale automatisch eine Mobilfunkverbindung zur Übermittlung einer Statusmeldung innerhalb des Mobilfunksystems herstellbar ist.

Die zweite Aufgabe wird gelöst durch ein Kommunikationssystem mit einer in einem Kraftfahrzeug integrierten Kommunikationseinrichtung mit einer Eingabeeinheit und einer akustischen Ausgabeeinheit, die mit einer Steuereinheit verbunden sind, sowie einem mit der Steuereinheit verbundenen Mobilfunkmodul eines zellularen Mobilfunksystems und einer mit der Steuereinheit verbundenen Kurzstreckenfunkeinrichtung, sowie einem externen Mobilfunkgerät eines zellularen Mobilfunksystems mit einer zweiten Kurzstreckenfunkeinrichtung, wobei die Kurzstreckenfunkeinrichtungen zum Datenaustausch über eine Kurzstreckenfunkverbindung ausgelegt sind, die Kommunikationseinrichtung ein Vergleichsmodul zum Vergleichen der über die Kurzstreckenfunkverbindung von dem Mobilfunkgerät empfangenen Daten mit in einem Speicherelement der Kommunikationseinrichtung abgespeicherten Daten aufweist und bei Übereinstimmung von empfangenen und abgespeicherten Daten hinsichtlich vorgegebener Merkmale automatisch eine Mobilfunkverbindung zur Übermittlung einer Statusmeldung innerhalb des Mobilfunksystems herstellbar ist. Die Statusmeldung betrifft insbesondere eine Rufumleitung innerhalb des Mobilfunksystems.

Das erfindungsgemäße Kommunikationssystem besteht somit aus zwei Komponenten, nämlich erstens der erfindungsgemäßen Kommunikationseinrichtung des Kraftfahrzeuges und zweitens einem externen Mobilfunkgerät, wobei es sich insbesondere um ein Mobilfunktelefon (Handy) handelt. Die Kommunikationseinrichtung im Kraftfahrzeug enthält bereits ein Mobilfunkmodul eines zellularen Mobilfunksystems sowie eine Eingabeeinheit und eine akustische Ausgabeeinheit. Durch diese Komponenten ist die Kommunikationseinrichtung bereits für Mobilfunkverbindungen ausgerüstet und damit insbesondere auch für die Aussendung eines Notrufes oder die Anforderung von Pannenhilfe oder Verkehrsinformationen geeignet. Die entsprechenden Komponenten sind an sich bekannt und entsprechen den in den eingangs genannten Systemen eingesetzten Komponenten.

Darüber hinaus weist die Kommunikationseinrichtung eine Kurzstreckenfunkeinrichtung auf, die mit der Steuereinheit der Kommunikationseinrichtung verbunden ist. Über das Mobilfunkmodul des zellularen Mobilfunksystems ist somit eine Weitbereichs-Funkverbindung herstellbar während über die Kurzstrekkenfunkeinrichtung eine Funkverbindung zu einem externen Gerät über eine vergleichsweise geringe Entfernung von typischerweise weniger als 100 m, vorzugsweise weniger als 10 m, herstellbar ist. Das externe Mobilfunkgerät weist ebenfalls eine solche Kurzstreckenfunkeinrichtung auf.

Sobald das externe Mobilfunkgerät in den Funkbereich der Kurzstreckenfunkeinrichtung der Kommunikationseinrichtung eintritt, können nunmehr automatisch Daten zwischen dem externen Mobilfunkgerät und der Kommunikationseinrichtung im Fahrzeug ausgetauscht werden. Die Kommunikationseinrichtung im Fahrzeug weist ferner ein Vergleichsmodul zum Vergleichen der über die Kurzstreckenfunkverbindung von dem Mobilfunkgerät empfangenen Daten mit in einem Speicherelement abgespeicherten Daten auf. Das Vergleichsmodul ist hierbei vorzugsweise als ein Computerprogramm ausgelegt, das in der Steuereinheit abläuft. Durch den vorgesehenen Vergleich kann geprüft werden, ob es sich bei dem externen Mobilfunkgerät um ein autorisiertes Gerät handelt. Wird bei dem Vergleich eine Übereinstimmung hinsichtlich vorgegebener Merkmale zwischen den empfangenen und den abgespeicherten Daten festgestellt, so wird automatisch eine Mobilfunkverbindung zur Übermittlung einer Statusmeldung innerhalb des Mobilfunksystems hergestellt.

Unter einer automatischen Herstellung einer Mobilfunkverbindung wird neben einer vollautomatischen Herstellung ohne Zutun des Benutzers insbesondere auch ein Verfahren verstanden, bei dem ein Benutzer der Herstellung dieser Mobilfunkverbindung erst zustimmen muss oder die Herstellung aktiviert, die Verbindung ansonsten aber automatisch hergestellt wird.

Der Vorteil der erfindungsgemäßen Kommunikationseinrichtung bzw. des erfindungsgemäßen Kommunikationssystems besteht daher zunächst darin, dass der Fahrer auch während der Fahrt im Fahrzeug unter der Telefonnummer seines tragbaren Mobilfunkgerätes erreichbar ist, er gleichzeitig jedoch die Funktionalität der im Fahrzeug eingebauten Kommunikationseinrichtung, insbesondere einer Freisprechfunktion, zur Verfügung hat. Insbesondere kann dabei auch vorgesehen sein, dass über die Kommunikationseinrichtung des Fahrzeuges und das dabei erforderliche Teilnehmeridentifizierungsmodul (SIM-Karte) im Fahrzeug lediglich fahrzeugbezogene Dienste zur Verfügung stehen, wie insbesondere Not- und Pannenruf oder Verkehrsinformationen. Fahrerbezogene Dienste, wie ein Internetzugang oder sonstige Telefongespräche (Unterscheidung über die gewählte Nummer) werden in diesem Fall dagegen über das Teilnehmeridentifizierungsmodul (SIM-Karte) des externen Mobilfunkgerätes ermöglicht, wobei der Fahrer hierfür jedoch gleichzeitig die Funktionalität der im Fahrzeug eingebauten Kommunikationseinrichtung nutzen kann. Es wird somit erreicht, dass auch für diese fahrerbezogenen Dienste die Komponenten der Kommunikationseinrichtung, wie insbesondere Freisprecheinrichtung, Eingabeeinheit oder die Mobilfunkantenne zur Verbesserung der Übertragungsqualität, Sicherheit und Zuverlässigkeit bei der Kommunikation innerhalb des zellularen Mobilfunksystems genutzt werden können.

Die Kommunikationseinrichtung kann insbesondere Bestandteil eines Audiosystems, eines Multimediasystems, eines Telematik-Systems oder eines Navigationssystems sein. Hierdurch können Komponenten dieser Systeme mitbenutzt werden. Im Falle einer Kombination mit einem Audiosystem können insbesondere die Lautsprecher des Audiosystems als akustische Ausgabeeinheit benutzt werden. Bei Kombination mit einem Multimediasystem können ebenfalls dessen Lautsprecher als akustische Ausgabeeinheit sowie auch dessen Eingabeeinheit genutzt werden. Als Bestandteil eines Telematik-Systems ist die Kommunikationseinrichtung insbesondere mit einer GPS-Empfangseinrichtung verbunden. Solche Systeme sind an sich bekannt und eingangs beschrieben. Bei Verknüpfung der Kommunikationseinrichtung mit einem Navigationssystem können insbesondere Verkehrsinformationen, die über das Mobilfunknetz empfangen werden, bei der Routenberechnung berücksichtigt werden.

Bei dem zellularen Mobilfunksystem kann es sich insbesondere um ein System nach dem GSM- oder UMTS-Standard handeln. Hierdurch ist sichergestellt, dass die Kommunikationseinrichtung flächendeckend betrieben werden kann und mit einer Vielzahl von externen Mobilfunkgeräten problemlos kombinierbar ist.

Für den Verbindungsaufbau zwischen der Kommunikationseinrichtung und dem externen Mobilfunkgerät ist eine Reichweite der Kurzstreckenfunkverbindung von nicht mehr als 10 m ausreichend. Durch eine an die Verhältnisse im Fahrzeug angepasste Reichweite der Kurzstreckenfunkverbindung wird erreicht, dass die Kommunikationseinrichtung nicht ständig mit nicht autorisierten Mobilfunkgeräten außerhalb des Fahrzeuges, beispielsweise von Fußgängern, oder anderen Autofahrern konfrontiert wird. Als besonders vorteilhaft wird eine Kurzstreckenfunkeinrichtung angesehen, die nach dem sogenannten Bluetooth-Standard arbeitet. Eine entsprechende Kurzstreckenfunkeinrichtung ist bereits in der eingangs genannten deutschen Patentanmeldung 199 21 533.2 der Patentanmelderin beschrieben.

Bei dem erfindungsgemäßen Kommunikationssystem ist insbesondere vorgesehen, dass innerhalb des zellularen Mobilfunksystems eine Berechtigung zur Rufumleitung vom externen Mobilfunkgerät auf die Kommunikationseinrichtung im Fahrzeug hinterlegt ist. Eine solche Hinterlegung ist nur einmalig erforderlich und gestattet danach die automatische Aktivierung der Rufumleitung.

In einer besonderen Ausführungsform der Erfindung ist vorgesehen, dass über das Teilnehmeridentifizierungsmodul (SIM-Karte) der Kommunikationseinrichtung im Fahrzeug ausschließlich auf den Betrieb des Kraftfahrzeuges bezogenen Dienste des zellularen Mobilfunksystems aktivierbar sind. Hierdurch wird eine leichte Ent- und Verkopplung von personenbezogenen und fahrzeugbezogenen Diensten und Funktionen für Telematik-, Telekommunikations- und Telemetriedienste erreicht. Dies ist besonders vorteilhaft bei Fahrzeugen, die von verschiedenen Fahrer benutzt werden, wie dies insbesondere bei Mietwagen, Firmenwagen oder dergleichen häufig der Fall ist.

Weiterhin ist insbesondere vorgesehen, dass auch bei aktivierter Rufumleitung von dem Mobilfunkgerät auf die Kommunikationseinrichtung des Fahrzeugs eine Gesprächsführung über das Mobilfunkgerät möglich ist. Die Mobilfunkverbindung innerhalb des Mobilfunknetzes erfolgt dabei über die Komponenten der Kommunikationseinrichtung im Fahrzeug, wobei ein Gesprächstransfer von der Kommunikationseinrichtung des Fahrzeugs über die Kurzstreckenfunkverbindung zu dem Mobilfunkgerät erfolgt. Hierdurch ist es beispielsweise möglich, dass das Telefongespräch auch von einem Mitfahrer im Fond des Fahrzeuges geführt wird, der zu der Freisprecheinrichtung der Kommunikationseinrichtung keinen Zugang hat.

Vorzugsweise wird die Rufumleitung automatisch deaktiviert, wenn das Mobiltelefon den Reichweitebereich der Kurzstreckenfunkverbindung verläßt. Hierdurch wird sichergestellt, dass der Fahrer auch bei Verlassen des Fahrzeuges wieder über sein Mobilfunkgerät erreichbar ist, ohne dass hierfür spezielle Bedienschritte erforderlich sind.

Das Kommunikationssystem kann insbesondere auch zum Zusammenspiel mit mehr als einem externen Mobilfunkgerät ausgelegt sein. Dies hat den Vorteil, dass auch bei mehreren Mitfahrern im Fahrzeug eine verbesserte Funktionalität, beispielsweise durch Nutzung der Antenne der Kommunikationseinrichtung erzielt wird, während gleichzeitig jeder der Mitfahrer ein Gespräch von seinem Mobilfunkgerät aus führen kann und auch die Abrechnung der Gesprächskosten über die Teilnehmeridentifizierung des jeweiligen Mobilfunkgeräts erfolgt.

Ein erfindungsgemäßes Verfahren zur Herstellung einer interaktiven Rufumleitung ist nicht ausschließlich auf die Kombination zwischen einer Kommunikationseinrichtung eines Fahrzeuges und einem externen Mobilfunkgerät beschränkt, sondern generell bei zwei oder mehr Mobilfunkgeräten anwendbar. Ein erfindungsgemäßes Verfahren zur Herstellung einer interaktiven Rufumleitung zwischen einem ersten und einem zweiten Mobilfunkgerät eines zellularen Mobilfunksystems, die jeweils eine Kurzstreckenfunkeinrichtung aufweisen, ist daher gekennzeichnet durch die Verfahrensschritte:
- Datenaustausch zwischen dem ersten und zweiten Mobilfunkgerät bei Eintritt des zweiten Mobilfunkgeräts in den Reichweitebereich der Kurzstrekkenfunkeinrichtung des ersten Mobilfunkgeräts,
- Identifizierung und Autorisierung des zweiten Mobilfunkgeräts anhand der über die Kurzstreckenfunkverbindung ausgetauschten Daten,
- Herstellen einer Rufumleitung vom zweiten Mobilfunkgerät auf das erste Mobilfunkgerät innerhalb eines Mobilfunksystems der Mobilfunkgeräte. Insbesondere wird bei einem solchen Verfahren auch geprüft, ob eine Berechtigung für eine Rufumleitung vom zweiten Mobilfunkgerät auf das erste Mobilfunkgerät innerhalb des zellularen Mobilfunksystems registriert ist.

Vorzugsweise ist vorgesehen, dass bei aktivierter Rufumleitung vom zweiten Mobilfunkgerät zum ersten Mobilfunkgerät Telefongespräche oder ein Datentransfer innerhalb des zellularen Mobilfunksystems über das erste Mobilfunkgerät durchführbar sind, wobei die Gebührenabrechnung der Mobilfunkverbindung über das Teilnehmeridentifizierungsmodul des zweiten Mobilfunkgeräts erfolgt. Hierdurch kann beispielsweise wieder eine höhere Funktionalität bzw. einfachere Bedienbarkeit des ersten Mobilfunkgerätes genutzt werden, während die Geprächsabrechnung jedoch über das zweite Mobilfunkgerät erfolgt, wodurch eine Entkopplung von Gesprächsgebühren möglich ist.

In einer besonderen Ausführungsform des Verfahrens ist vorgesehen, dass das erste Mobilfunkgerät eine Serverfunktion übernimmt und eine Rufumleitung zwischen mehr als 2 Mobilfunkgeräten möglich ist. Hierbei ist die Rufumleitung von mehreren Mobilfunkgeräten stets auf das erste Mobilfunkgerät mit der Serverfunktion möglich. Hierdurch kann die Funktionalität einer Telefonanlage hergestellt werden, wobei ausgehende Gespräche stets über das erste Mobilfunkgerät in das Mobilfunknetz gesendet werden, die Kostenabrechnung jedoch personenbezogen den verschiedenen Mobilfunkgeräten zugeordnet werden kann.

Insbesondere ist vorgesehen, dass eine Gesprächsübernahme/-annahme zwischen den Mobilfunkgeräten durchführbar ist. Hierdurch wird erreicht dass ein Telefongespräch an einem beliebigen Mobilfunkgerät, die an diesem Verfahren beteiligt sind, durchführbar ist. Weitere vorteilhafte Ausgestaltungen sind in den Unteransprüchen angegeben.

Die Erfindung wird nachfolgend anhand von Ausführungsbeispielen und der Zeichnung näher erläutert. Es zeigen:
- Figur 1: eine erfindungsgemäße Kommunikationseinrichtung und die wesentlichen Komponenten eines erfindungsgemäßen Kommunikationssystems
- Figur 2: einen ersten Verfahrensablauf zur erstmaligen Registrierung und gleichzeitigen Aktivierung einer Rufumleitung im Mobilfunknetz
- Figur 3: einen Verfahrensablauf zur Rufumleitung eines eingehenden Telefongesprächs
- Figur 4: einen Verfahrensablauf zur Rufumleitung eines zweites Mobilfunkgeräts
- Figur 5: einen Verfahrensablauf zur Rufumleitung eines ausgehenden Telefongesprächs.

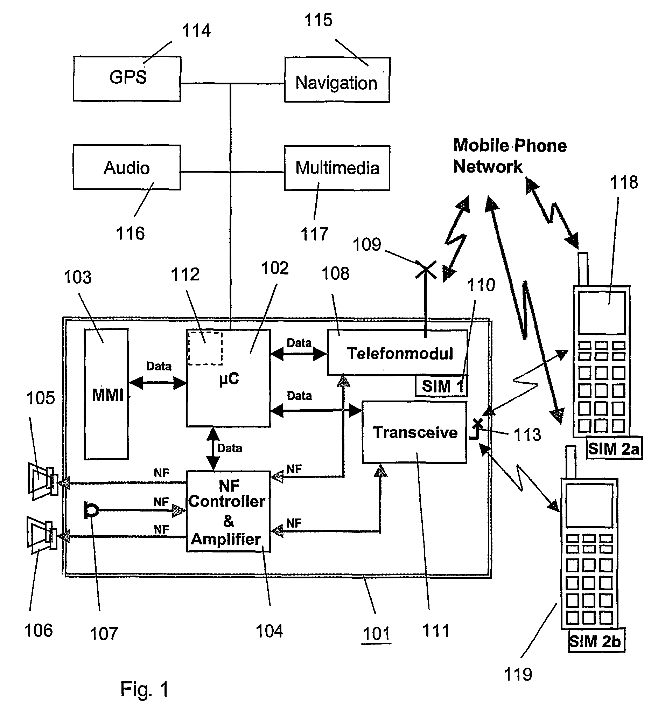

In Figur 1 ist beispielhaft ein erfindungsgemäßes Kommunikationssystem dargestellt. Das Kommunikationssystem enthält eine Kommunikationseinrichtung 101, die in einem Fahrzeug angeordnet ist. Zentraler Bestandteil der Kommunikationseinrichtung 101 ist die Steuereinheit 102. Mit der Steuereinheit 102 ist eine Eingabeeinheit 103 verbunden. Mit der Steuereinheit 102 ist weiterhin eine akustische Ausgabeeinheit verbunden, die einen NF-Controller und Verstärker 104 sowie die mit dem NF-Controller 104 verbundenen Lautsprecher 105, 106 beinhaltet. Mit dem NF-Controller 104 ist weiterhin ein Mikrophon 107 verbunden. Die Kommunikationseinrichtung 101 enthält weiterhin ein Mobilfunkmodul 108. Das Mobilfunkmodul 108 enthält die notwendigen Komponenten zur Herstellung einer Funkverbindung innerhalb eines zellularen Mobilfunknetzes, beispielsweise nach dem GSM- oder dem UTMS-Standard. Bestandteil des Mobilfunkmoduls ist hierbei insbesondere eine Sende-/Empfangseinrichtung. Das Mobilfunkmodul 108 ist mit einer Antenne 109 verbunden, die in der Regel außen am Fahrzeug angebracht ist, um eine qualitativ hochwertige Mobilfunkverbindung herstellen zu können. Bestandteil des Mobilfunkmoduls 108 ist weiterhin ein Teilnehmeridentifizierungsmodul 110, das in bekannter Weise herkömmliche Mobilfunkgeräte als SIM-Karte ausgebildet ist. Mit den beschriebenen Komponenten ist die Kommunikationseinrichtung für einen Mobilfunkverkehr innerhalb eines zellularen Mobilfunknetzes ausgelegt. Insbesondere ist dabei durch das Mikrophon 107 und die Lautsprecher 105,106 eine Freisprecheinrichtung realisiert.

Die Kommunikationseinrichtung 101 enthält nun zusätzlich einen an sich bekannten Transceiver 111, der als Kurzstreckenfunkeinrichtung, insbesondere nach dem Bluetooth-Standard, ausgelegt ist. Der Transceiver 111 ist mit einer geeigneten Sende-/Empfangsantenne 112 verbunden. Weiterhin ist der Transceiver 111 mit der Steuereinrichtung 102 verbunden, so dass zwischen diesen beiden Komponenten ein Datenaustausch erfolgen kann. Über eine Verbindung zwischen dem Transceiver 111 und dem NF-Controller 104 können Audiosignale mit dem NF-Controller 104 ausgetauscht werden.

Optional kann die Kommunikationseinrichtung 102 über eine Schnittstelle mit einem GPS-Empfangsmodul 114 verbunden sein. In diesem Falle ist die exakte Fahrzeugposition bestimmbar, so dass diese bei einem ausgehenden Notruf oder einer Pannenhilfeanforderung über das Mobilfunknetz mitübermittelt werden kann. Die Kommunikationseinrichtung 101 weist dann die Funktionalität eines sogenannten Telematikendgerätes auf.

Weiterhin kann die Kommunikationseinrichtung 101 über eine Schnittstelle mit einem an sich bekannten Fahrzeugnavigationssystem 115 verbunden sein. Über die Kommunikationseinrichtung 101 können daher insbesondere verkehrsbezogene Daten an das Navigationssystem weitergeleitet werden, die über die Mobilfunkverbindung empfangen wurden. Somit lässt sich eine sogenannte dynamische Zielführung realisieren.

Weiterhin kann die Kommunikationseinrichtung 101 mit einem Audiosystem 116 des Kraftfahrzeuges verbunden sein. In diesem Falle können die Lautsprecher 105,106 insbesondere auch Bestandteil dieses Audiosystems sein.

In einer weiteren Ausgestaltung kann die Kommunikationseinrichtung 101 mit einem Fahrzeugmultimediasystem 117 verbunden sein, so dass beispielsweise über die Kommunikationseinrichtung 101 ein Internetzugang im Fahrzeug realisierbar ist.

Bestandteil des erfindungsgemäßen Kommunikationssystems ist mindestens ein zusätzliches Mobilfunkgerät 118, 119. Diese Mobilfunkgeräte weisen in bekannter Weise ein Mobilfunkmodul, eine Benutzerschnittstelle und eine Antenne auf und sind daher unabhängig von dem Kommunikationssystem 101 nutzbar. Bei den Mobilfunkgeräten 118, 119 handelt es sich insofern insbesondere um handelsübliche Handys. Wie bei diesen Geräten üblich, weisen die Mobilfunkgeräte 118, 119 jeweils eine SIM-Karte auf, über die eine Identifizierung innerhalb des Mobilfunknetzes möglich ist.

Die Mobilfunkgeräte 118, 119 weisen nun zusätzlich eine Kurzstreckenfunkeinrichtung auf, die im wesentlichen der Kurzstreckenfunkeinrichtung innerhalb der Kommunikationseinrichtung 101 entspricht. Entsprechende Kurzstreckenfunkeinrichtungen sind auch bereits in der deutschen Patentanmeldung 199 21 533.2 im Zusammenhang mit Kommunikationssystemen für Kraftfahrzeuge beschrieben. Über die Kurzstreckenfunkeinrichtungen der Kommunikationseinrichtung 101 und der Mobilfunkgeräte 118, 119 ist nunmehr ein Datenaustausch möglich. Hierbei werden die über die Antenne 113 und den Transceiver 111 von den Mobilfunkgeräten 118, 119 empfangenen Daten an die Steuereinheit 102 weitergeleitet. Durch ein entsprechendes Programm werden in der Steuereinheit 102 die empfangenen Mobilfunkdaten mit Daten verglichen, die in der Speichereinrichtung 112 abgespeichert sind. Der Vergleich erfolgt hierbei hinsichtlich vorgegebener Merkmale, die insbesondere eine Gerätekennung der Mobilfunkgeräte 118,119 betreffen. Fällt dieser Vergleich positiv aus, d.h. das Mobilfunkgerät 118,119 ist ein autorisiertes Gerät, so erfolgt automatisch eine Mobilfunkverbindung von der Kommunikationseinrichtung 101 in das zellulare Mobilfunksystem. Im Rahmen dieser Mobilfunkverbindung wird eine Statusmeldung an einen Server des Mobilfunksystems übermittelt, der insbesondere eine Rufumleitung von dem Mobilfunkgerät 118, 119 zu der Kommunikationseinrichtung 101 aktiviert. Hierdurch ist es möglich, dass an die Mobilfunkgeräte 118, 119 gerichtete Telefongespräche über eine Mobilfunkverbindung innerhalb des zellularen Mobilfunknetzes an die Kommunikationseinrichtung 101 übermittelt werden, während die Abrechnung evtl. anfallender Gesprächsgebühren jedoch über die SIM-Karte des Mobilfunkgeräts 118, 119 erfolgt.

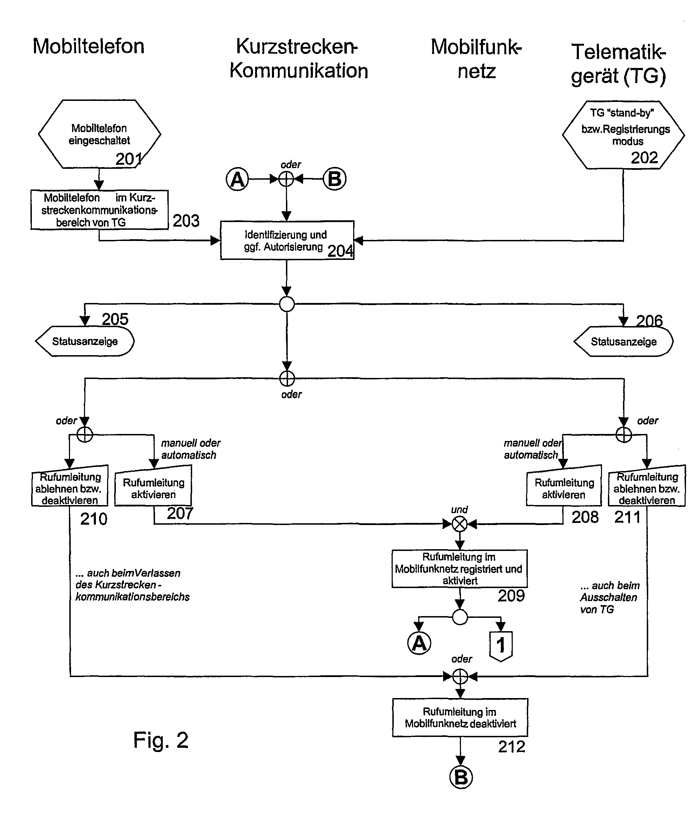

Verschiedene Verfahren für unterschiedlich auftretende Situationen für ein Kommunikationssystem mit einem Telematikgerät (TG) als Kommunikationseinrichtung im Fahrzeug und einem oder mehreren Mobiltelefonen als Mobilfunkgeräte werden nachfolgend anhand der Figuren 2-5 beschrieben.

Figur 2 zeigt einen Verfahrensablauf zur erstmaligen Registrierung und Aktivierung einer Gesprächsumleitung, d.h. ein Beispiel für einen Verfahrensablauf, der dann eintritt, wenn ein Mobiltelefon 118, 119 erstmals in den Kurzstrekkenfunkbereich einer Kommunikationseinrichtung 101 eintritt. Wie auch bei den nachfolgenden Verfahrensbeispielen sind die einzelnen Verfahrensschritte, die innerhalb des Mobiltelefons, über die Kurzstreckenkommunikation, das Mobilfunknetz und innerhalb der Kommunikationseinrichtung im Fahrzeug ablaufen, in verschiedenen Spalten dargestellt.

In der Ausgangssituation gemäß Figur 2 ist in Schritt 201 das Mobiltelefon eingeschaltet und die Kommunikationseinrichtung, bei der es sich um ein Telematikendgerät TG handelt, befindet sich in einem Registrierungsmodus (Schritt 202). Der Registrierungsmodus ist beispielsweise in einem Menü einstellbar und erlaubt die erstmalige Registrierung neuer Kommunikationseinrichtungen. In Schritt 203 befindet sich das Mobiltelefon nun im Kurzstreckenkommunikationsbereich des Telematikgerätes TG. Bei der Kurzstreckenkommunikationseinrichtung handelt es sich um eine solche, die nach dem sogenannten und an sich gekannten Bluetooth-Verfahren arbeitet. In Verfahrensschritt 204 wird eine gegenseitige Identifizierung des Telematikgerätes und des Mobiltelefons durchgeführt. Nach Abschluss von Schritt 204 wird im vorliegenden Fall festgestellt, dass das Mobiltelefon sich erstmals im Kurzstreckenkommunikationsbereich des Telematikgerätes TG befindet. In Schritt 205 und 206 erfolgt sowohl am Mobiltelefon als auch am Telematikgerät eine entsprechende Statusanzeige. Bei der Statusanzeige kann es sich insbesondere um ein Icon handeln, das auf den jeweiligen Displays des Mobiltelefons und des Telematikgerätes angezeigt wird und dem Benutzer symbolisiert, dass sich ein neues Gerät im Kurzstreckenfunkbereich befindet.

Der Benutzer kann nun das neu identifizierte Mobiltelefon für die Verwendung in einem Kommunikationssystem zusammen mit dem Telematikgerät autorisieren und eine Rufumleitung im Mobilfunksystem registrieren und aktivieren lassen. Dies kann im Schritt 207 sowohl am Mobiltelefon als auch im Schritt 208 am Telematikgerät erfolgen. Hierzu ist beispielsweise eine entsprechende Taste am Mobiltelefon bzw. am Telematikgerät zu aktivieren, wonach dann automatisch in Schritt 209 eine Mobilfunkverbindung in das Mobilfunknetz hergestellt wird und eine entsprechende Rufumleitungsmitteilung an den Netzbetreiber übermittelt wird. Alternativ kann die Rufumleitung in den Verfahrensschritten 210, 211 entweder am Mobiltelefon oder am Telematikgerät jedoch auch abgelehnt werden. Die Ablehnung kann beispielsweise auch durch Betätigen einer entsprechenden Taste erfolgen. In einer alternativen Ausführungsform kann die Ablehnung jedoch auch zeitgesteuert erfolgen, sodass nach Ablauf einer vorgegebenen Zeitspanne, nachdem das Mobiltelefon in den Kurzstrekkenkommunikationsbereich des Telematikgerätes eingetreten ist, ohne dass eine Rufumleitung aktiviert wurde, diese als abgelehnt gilt. In einer abgewandelten Verfahrensweise, bei der eine Rufumleitung im Mobilfunknetz bereits aktiviert war, kann in den Verfahrensschritten 210 bzw. 211 eine solche Rufumleitung auch deaktiviert werden, wobei die entsprechende Mitteilung im Verfahrensschritt 212 über das Mobilfunknetz an einen Server des Mobilfunkbetreibers übermittelt wird. Anschließend an die Verfahrensschritte 209, 212 kann sich erneut ein Identifizierungs- und Autorisierungsschritt 204 anschließen, sodass eine Rufumleitung jederzeit aktivierbar bzw. deaktivierbar ist. Dies kann insbesondere auch im Standby-Modus des Telematikgeräts möglich sein.

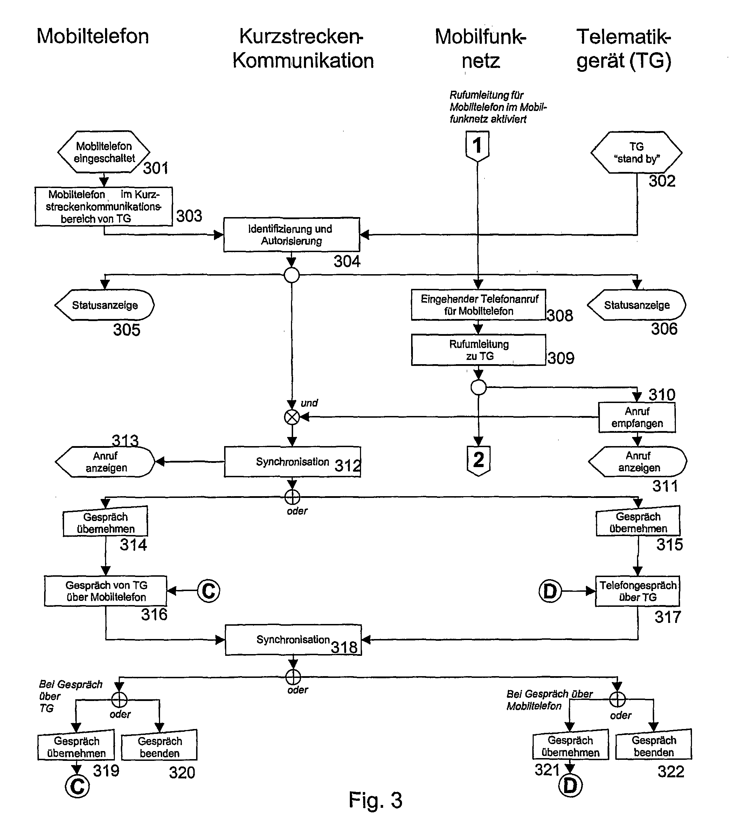

Figur 3 zeigt einen Verfahrensablauf bei einem eingehenden Telefongespräch am Mobiltelefon. Die Verfahrensschritte 301-306 sind hierbei mit den Verfahrensschritten 201-206 weitgehend identisch. Es wir davon ausgegangen, dass die Rufumleitung im Mobilfunknetz für das Mobiltelefon aktiviert ist. Dies ist durch die mit "1" gekennzeichnete Verbindungsstelle bezeichnet, die mit der entsprechenden Verbindungsstelle gemäß Fig. 2 identisch ist. In Schritt 308 geht nun im Mobilfunknetz ein Telefonanruf für das Mobiltelefon ein.

In Schritt 309 erfolgt innerhalb des Mobilfunknetzes eine Rufumleitung zum Telematikgerät. Der eingehende Anruf wird nun im Verfahrensschritt 310 im Telematikgerät empfangen, woraufhin in Schritt 311 eine Anrufanzeige im Telematikgerät erfolgt. Das Telematikgerät übermittelt nun über die Kurzstreckenkommunikationsschnittstelle ein Signal an das Mobiltelefon, das auf den eingehenden Anruf hinweist. Hierzu wird in Verfahrensschritt 312 eine Synchronisation innerhalb der Kurzstreckenkommunikation durchgeführt, um anschließend in Verfahrensschritt 313 auch auf einem Display des Mobiltelefons einen Hinweis auf den eingehenden Anruf anzeigen zu können. Anschließend kann das Gespräch im Verfahrensschritt 314 am Mobiltelefon oder im Verfahrensschritt 315 am Telematikgerät übernommen werden.

Wird das Gespräch im Schritt 314 am Mobiltelefon übernommen, so wird anschließend im Schritt 316 das Gespräch über das Mobiltelefon geführt. Wird dagegen das Gespräch im Schritt 315 am Telematikgerät übernommen so wird in Schritt 317 anschließend das Telefongespräch über die Freisprecheinrichtung des Telematikgerätes geführt. Unabhängig davon über welches der Geräte das Gespräch geführt wird, erfolgt in Schritt 318 über die Kurzstreckenkommunikationsschnittstelle wiederum eine Synchronisation zwischen dem Mobiltelefon und dem Telematikgerät. Hierdurch ist es möglich, das Gespräch jederzeit auch an dem gerade für das Gespräch nicht genutzten Gerät zu übernehmen. Wird beispielsweise das Telefongespräch über das Telematikgerät geführt, so kann das Gespräch im Schritt 319 am Mobiltelefon durch Drücken einer entsprechenden Taste übernommen werden oder in Schritt 320 beendet werden. Desgleichen kann bei Gesprächsführung über das Mobiltelefon in Schritt 316 in Schritt 321 das Gespräch auch am Telematikgerät übernommen werden oder im Schritt 322 am Telematikgerät beendet werden. Wird das Gespräch in Schritt 319 am Mobiltelefon übernommen, so kann es anschließend in Schritt 316 am Mobiltelefon geführt werden, während entsprechend bei einer Übernahme des Gesprächs in Schritt 321 am Telematikgerät die Gesprächsführung in Schritt 317 erfolgt. Dies wird durch die Verbindungsstellen C bzw. D symbolisiert.

Bei den beschriebenen Verfahren geht somit das Gespräch stets über eine Mobilfunkverbindung zum Telematikgerät ein, wodurch insbesondere eine am Fahrzeug angebrachte Antenne des Telematikgerätes genutzt werden kann. Das Gespräch selbst kann auch am Mobiltelefon geführt werden. In letzterem Falle erfolgt die Gesprächsweitergabe über die Kurzstreckenkommunikationseinrichtung.

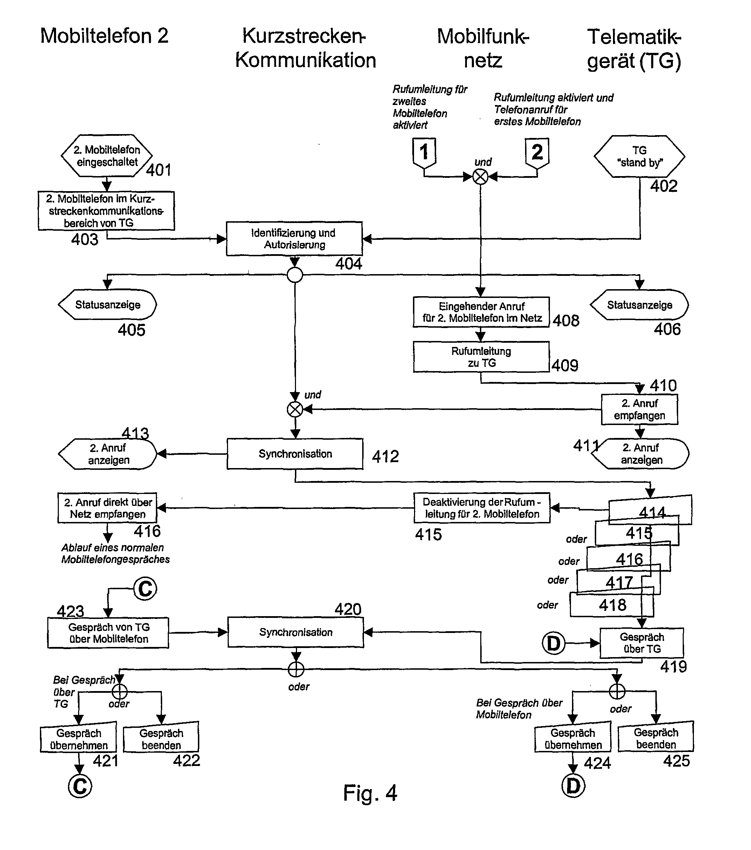

In Figur 4 ist als weiteres Ausführungsbeispiel ein Verfahrensablauf dargestellt, bei dem zwei Mobiltelefone über eine Rufumleitung mit dem Telematikgerät verbunden sind. Über das erste Mobilfunkgerät wird bereits ein Telefongespräch geführt, während gleichzeitig für das zweite Mobilfunkgerät ein Telefonanruf am Telematikgerät eingeht. Hinsichtlich des ersten Telefongesprächs schließt das Verfahren innerhalb des Mobilfunknetzes in der mit 2 bezeichneten Verbindungsstelle an das in Figur 3 bezeichnete Verfahren an. Für das zweite Mobiltelefon ist eine Rufumleitung im Netz ebenfalls aktiviert, sodass hinsichtlich des Mobilfunknetzes hier ein Anschluss an der mit 1 bezeichneten Verbindungsstelle an das Verfahren gemäß Figur 2 erfolgt.

Die Verfahrensschritte 401-406 entsprechen den Verfahrensschritten 301-306 mit dem Unterschied, dass sie sich nunmehr auf das zweite Mobiltelefon beziehen. Ausgehend von der geschilderten Eingangssituation geht nun in Schritt 408 ein Anruf für das zweite Mobiltelefon im Mobilfunknetz ein. Analog zu dem bereits im Zusammenhang mit Figur 3 beschrieben Verfahren wird dieser Anruf aufgrund der Rufumleitung am Telematikgerät empfangen (Schritt 410), in Schritt 411 wird dieser Anruf am Telematikgerät angezeigt. Analog zu Schritt 312 erfolgt in Schritt 412 eine Synchronisation und nachfolgend eine Anzeige des eingehenden Telefonanrufs, nunmehr jedoch am zweiten Mobiltelefon (Schritt 413).

Anschließend an die Synchronisation der Kurzstreckenkommunikation in Schritt 412 können nun unterschiedliche Funktionen am Telematikgerät vorgenommen werden. Da über das Telematikgerät bereits ein Telefongespräch geführt wird, gibt es hierzu unterschiedliche Möglichkeiten, die nachfolgend beschrieben werden. Beispielsweise kann in Schritt 414 das Telefongespräch an das zweite Mobiltelefon weitergeleitet werden, dies hat im Schritt 415 eine automatische Deaktivierung der Rufumleitung für das zweite Mobiltelefon innerhalb des Mobilfunknetzes zur Folge. Anschließend kann in Schritt 416 der zweite Anruf direkt über das Mobilfunknetz am zweiten Mobiltelefon empfangen werden und es läuft ein normales Mobiltelefongespräch ab.

Alternativ zur Weiterleitung des zweiten Gesprächs an das Mobiltelefon in Schritt 414 ist es jedoch auch in Schritt 415 möglich das zweite Telefongespräch zu übernehmen, zu makeln (Schritt 416), das zweite Gespräch abzulehnen (Schritt 417) oder eine Gesprächskonferenz mit beiden Telefongesprächen zu aktivieren (Schritt 418). In diesen Fällen wird das zweite Gepräch über das Telematikgerät geführt (Schritt 419), anschließend erfolgt in Schritt 420 wiederum eine Synchronisation über die Kurzstreckenfunkverbindung zwischen dem Mobiltelefon 2 und dem Telematikgerät. Nachfolgend kann das Gespräch in Schritt 421 am Mobiltelefon 2 übernommen werden oder in Schritt 422 am Mobiltelefon 2 beendet werden. Wird das Gespräch in Schritt 421 am Mobiltelefon 2 übernommen, so wird anschließend in Schritt 423 das Gespräch über das zweite Mobiltelefon geführt. Hierbei erfolgt wiederum eine Synchronisation zwischen Mobiltelefon und Telematikgerät in Schritt 420.

Wird das Gespräch über das zweite Mobiltelefon geführt, so kann schließlich wieder in Schritt 424 das Gespräch am Telematikgerät übernommen werden und anschließend in Schritt 419 über das Telematikgerät geführt werden. Dies ist durch die Verbindungsstelle D angedeutet. Alternativ kann das Gespräch in Schritt 425 über das Telematikgerät beendet werden.

Die oben beschriebenen Funktionen sind im wesentlichen in Form eines Programmes in dem Telematikgerät abgespeichert und lauffähig. Bei den beschriebenen Verfahren der Rufumleitungen werden alle evtl. anfallenden Gesprächskosten für das Gespräch für das zweite Mobiltelefon auch dessen SIM-Karte zugeordnet, unabhängig davon, ob das Gespräch über das zweite Mobiltelefon oder das Telematikgerät geführt wird.

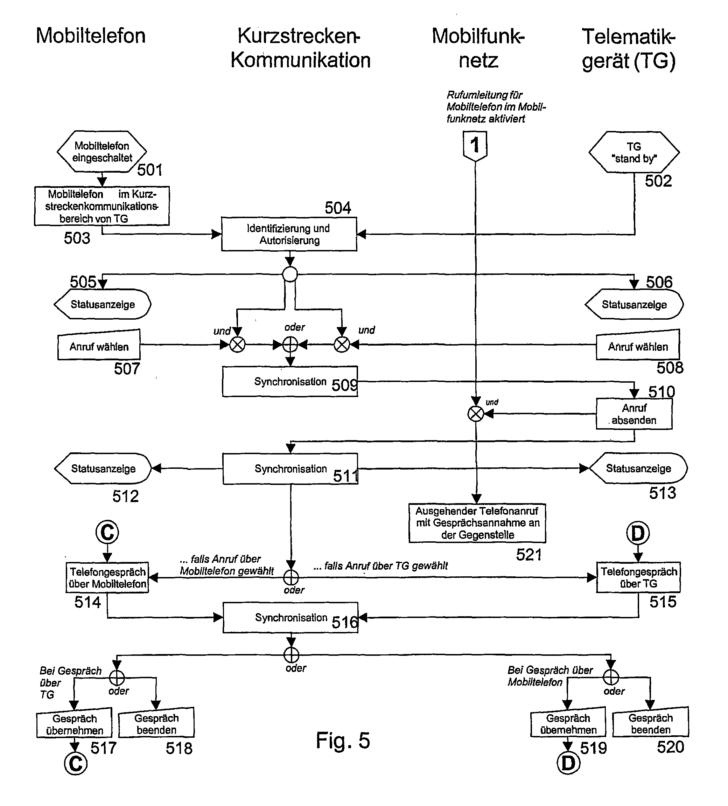

In Figur 5 ist ein Verfahrensablauf dargestellt, der nunmehr für ein ausgehendes Telefongespräch gilt. Wie durch die mit 1 bezeichnete Verbindungsstelle, die an Figur 1 anknüpft, ersichtlich ist, ist die Rufumleitung für das Mobiltelefon im Mobilfunknetz aktiviert. Die Verfahrensschritte 501-506 entsprechen wiederum den Verfahrensschritten 301-306 bzw. 401-406. Nach einer Identifizierung und Autorisierung des Mobiltelefons und des Telematikgerätes in Schritt 504 kann in Schritt 507 bzw. 508 ein Anruf am Mobiltelefon bzw. am Telematikgerät gewählt werden. Nach Wählen des Anrufes erfolgt in Schritt 509 wiederum eine Synchronisation der Kurzstreckenkommunikation zwischen dem Mobiltelefon und dem Telematikgerät. Anschließend wird in Schritt 510 der Anruf am Telematikgerät abgesendet worauf innerhalb des Mobilfunknetzes in Schritt 521 ein ausgehender Telefonanruf erfolgt, der an der Gegenstelle angenommen werden kann.

Anschließend an Schritt 510 erfolgt parallel zu Schritt 521 wiederum eine Synchronisation der Kurzstreckenfunkverbindung in Schritt 511. Hierauf erfolgt eine entsprechende Statusanzeige 512 bzw. 513 am Mobiltelefon bzw. am Telematikgerät.

Wurde der Anruf am Mobiltelefon gewählt, so wird in Schritt 514 das Telefongespräch über das Mobiltelefon geführt. Wurde der Anruf über das Telematikgerät gewählt, so wird in Schritt 515 das Telefongespräch über die Freisprecheinrichtung des Telematikgerätes geführt. In beiden Fällen erfolgt in Schritt 516 eine Synchronisation über die Kurzstreckenfunkverbindung. Wird das Telefongespräch in Schritt 515 über das Telematikgerät geführt, so kann in Schritt 517 das Telefongespräch auch am Mobiltelefon übernommen und anschließend in Schritt 514 weitergeführt werden. Dies ist durch die Verbindungsstelle C gekennzeichnet. Das Gespräch kann am Mobiltelefon dann auch in Schritt 518 beendet werden. Wird das Gepräch dagegen über das Mobiltelefon geführt, so kann in Schritt 519 das Gespräch am Telematikgerät übernommen werden und anschließend in Schritt 515 geführt werden. Dies ist durch die Verbindungsstelle D symbolisiert. Das Gespräch kann in diesem Falle in Schritt 520 am Telematikgerät beendet werden.

Auch bei einem ausgehenden Telefongespräch wird somit bei eingeschalteter Rufumleitung die Mobilfunkverbindung über das Telematikgerät aufgebaut, wobei jedoch eine Kostenzuordnung des Telefongesprächs zu der SIM-Karte des Mobiltelefons aufgrund der aktivierten Rufumleitung erfolgt. Die eigentliche Gesprächsführung kann sowohl am Mobiltelefon als auch am Telematikgerät erfolgen. Die Umschaltung der Gesprächsführung erfolgt dabei wie auch in den vorhergehenden Beispielen stets über die Kurzstreckenfunkverbindung zwischen dem Mobiltelefon und dem Telematikgerät, während gegenüber dem Mobilfunknetz stets eine Mobilfunkverbindung vom Telematikgerät her aufgebaut wird.

Bei Betrieb von zwei Mobiltelefonen mittels Rufumleitung an einem Telematikgerät können weitere Situationen auftreten, die nachfolgend kurz erläutert sind. In allen Fällen wird davon ausgegangen, dass eine Rufumleitung von beiden Mobiltelefonen zum Telematikgerät aktiviert ist.

Das nächste Beispiel betrifft hierzu eine Situation, bei der mit dem ersten Mobiltelefon ein Telefongespräch geführt wird und ein ausgehendes Telefongespräch am zweiten Mobiltelefon erfolgen soll. Das erste Telefongespräch kann dabei über das Telematikgerät oder das erste Mobiltelefon geführt sein. Das zweite Telefongespräch wird nun mit dem zweiten Mobiltelefon gewählt. Da eine Mobilfunkverbindung von dem Telematikgerät zum Mobilfunknetz jedoch bereits aufgebaut ist, kann das zweite Mobilfunkgespräch nur direkt vom zweiten Mobilfunkgerät aus geführt werden. Hierzu wird die Rufumleitung automatisch deaktiviert. Die Gesprächskosten werden den jeweiligen Mobilfunktelefonen zugeordnet.

In einem weiteren Ausführungsbeispiel wird davon ausgegangen, dass ein Telefongespräch bei eingeschalteter Rufumleitung geführt wird, während gleichzeitig Telematikdaten übertragen werden. Das Telefongespräch kann über das Telematikgerät oder über das Mobiltelefon geführt werden, während gleichzeitig Telematikdaten, wie beispielsweise Diagnose- oder Verkehrsdaten übertragen werden. Ein paralleler Gesprächs- und Datenverkehr ist somit möglich. Die Abrechnung der Telematikkosten erfolgt dabei über die SIM-Karte des Telematikgerät während die Gesprächsabrechnung über die SIM-Karte des Mobiltelefons erfolgt.

Mit dem erfindungsgemäßen Verfahren bzw. dem erfindungsgemäßen Kommunikationssystem ist eine komfortable Kommunikation innerhalb eines Kraftfahrzeuges unter Ausnutzung einer im Kraftfahrzeug integrierten Freisprecheinrichtung möglich, wobei gleichzeitig die Kosten für verschiedene Dienste dem Fahrzeug bzw. einem benutzerspezifischen Endgerät zugeordnet werden können. Dies wird insbesondere durch eine automatische Rufumleitung innerhalb des zellularen Mobilfunksystems und eine Kurzstreckenkommunikation zwischen den Endgeräten realisiert. Hierzu ist eine Vielzahl von konkreten Ausführungsformen neben den beschriebenen Ausführungsformen möglich.

## Patentansprüche

1. Kommunikationseinrichtung eines Kraftfahrzeuges mit einer Eingabeeinheit (103) und einer akustischen Ausgabeeinheit (104-106), die mit einer Steuereinheit (102) verbunden sind, sowie einem mit der Steuereinheit (102) verbundenen Mobilfunkmodul (108) eines zellularen Mobilfunksystems,
wobei die Kommunikationseinrichtung (101) eine mit der Steuereinheit (102) verbundene Kurzstreckenfunkeinrichtung aufweist, wobei die Kurzstreckenfunkeinrichtung zum Datenaustausch über eine Kurzstreckenfunkverbindung ausgelegt ist,
**dadurch gekennzeichnet, dass** die Kommunikationseinrichtung (101) ein Vergleichsmodul zum Vergleichen von über die Kurzstreckenfunkverbindung empfangenen Daten mit in einem Speicherelement (112) abgespeicherten Daten aufweist, und bei Übereinstimmung von empfangenen und abgespeicherten Daten hinsichtlich vorgegebener Merkmale automatisch eine Mobilfunkverbindung zur Übermittlung einer Statusmeldung innerhalb des Mobilfunksystems herstellbar ist.

2. Kommunikationseinrichtung nach Anspruch 1, **dadurch gekennzeichnet, dass** die Statusmeldung eine Rufumleitung innerhalb des Mobilfunksystems betrifft.

3. Kommunikationseinrichtung nach einem der vorhergehenden Ansprüche, **dadurch gekennzeichnet, dass** die Kommunikationseinrichtung (101) eine Freisprecheinrichtung enthält.

4. Kommunikationseinrichtung nach einem der vorhergehenden Ansprüche, **dadurch gekennzeichnet, dass** die Kommunikationseinrichtung (101) Bestandteil eines Audiosystems, eines Multimediasystems, eines Telematiksystems oder eines Navigationssystems ist.

5. Kommunikationseinrichtung nach einem der vorhergehenden Ansprüche, **dadurch gekennzeichnet, dass** es sich bei dem zellularen Mobilfunksystem um ein System nach dem GSM- der UMTS-Standard handelt.

6. Kommunikationseinrichtung nach einem der vorhergehenden Ansprüche, **dadurch gekennzeichnet, dass** die Reichweite der Kurzstreckenfunkverbindung nicht mehr als 100 m, vorzugsweise nicht mehr als 10 m, beträgt.

7. Kommunikationseinrichtung nach einem der vorhergehenden Ansprüche, **dadurch gekennzeichnet, dass** die Kurzstreckenfunkeinrichtung nach dem Bluetooth-Standard arbeitet.

8. Kommunikationssystem mit einer in einem Kraftfahrzeug integrierten Kommunikationseinrichtung (101) nach einem der vorhergehenden Ansprüche, sowie mit einem externen Mobilfunkgerät (118; 119) eines zellularen Mobilfunksystems mit einer zweiten Kurzstreckenfunkeinrichtung, wobei das Vergleichsmodul der Kommunikationseinrichtung die über die Kurzstreckenfunkverbindung von dem Mobilfunkgerät (118; 119) empfangenen Daten mit in einem Speicherelement (112) der Kommunikationseinrichtung (101) abgespeicherten Daten vergleicht.

9. Kommunikationssystem nach einem der vorhergehenden Ansprüche, **dadurch gekennzeichnet, dass** die Statusmeldung eine Rufumleitung vom Mobilfunkgerät (118; 119) auf die Kommunikationseinrichtung (101) betrifft.

10. Kommunikationssystem nach einem der vorhergehenden Ansprüche, **dadurch gekennzeichnet, dass** im zellularen Mobilfunksystem eine Berechtigung zur Rufumleitung des Mobilfunkgeräts (118; 119) auf die Kommunikationseinrichtung hinterlegt ist.

11. Kommunikationssystem nach einem der vorhergehenden Ansprüche, **dadurch gekennzeichnet, dass** die Kommunikationseinrichtung (101) eine Freisprechfunktion aufweist.

12. Kommunikationssystem nach einem der vorhergehenden Ansprüche, **dadurch gekennzeichnet, dass** es sich bei dem zellularen Mobilfunksystem um ein System nach dem GSM- der UMTS-Standard handelt.

13. Kommunikationssystem nach einem der vorhergehenden Ansprüche, **dadurch gekennzeichnet, dass** die Reichweite der Kurzstreckenfunkverbindung nicht mehr als 100 m, vorzugsweise nicht mehr als 10 m, beträgt.

14. Kommunikationssystem nach einem der vorhergehenden Ansprüche, **dadurch gekennzeichnet, dass** die Kurzstreckenfunkeinrichtung nach dem Bluetooth-Standard arbeitet.

15. Kommunikationssystem nach einem der vorhergehenden Ansprüche, **dadurch gekennzeichnet, dass** es sich bei den vorgegebenen Merkmalen um eine Gerätekennung des Mobilfunkgeräts (118; 119) handelt.

16. Kommunikationssystem nach einem der vorhergehenden Ansprüche, **dadurch gekennzeichnet, dass** die Kommunikationseinrichtung (101) eine Chip-Karte als ein Teilnehmer-Identifizierungsmodul (110) für das zellulare Mobilfunksystem enthält.

17. Kommunikationssystem nach einem der vorhergehenden Ansprüche, **dadurch gekennzeichnet, dass** das Mobilfunkgerät (118; 119) eine Chip-Karte als ein Teilnehmer-Identifizierungsmodul für das zellulare Mobilfunksystem enthält.

18. Kommunikationssystem nach einem der vorhergehenden Ansprüche, **dadurch gekennzeichnet, dass** über das Teilnehmer-Identifizierungsmodul (110) der Kommunikationseinrichtung (101) ausschließlich auf den Betrieb des Kraftfahrzeugs bezogene Dienste des zellularen Mobilfunksystems aktivierbar sind.

19. Kommunikationssystem nach einem der vorhergehenden Ansprüche, **dadurch gekennzeichnet; dass** bei aktivierter Rufumleitung für das Mobilfunkgerät (118; 119) Telefongespräche oder ein Datentransfer über die Kommunikationseinrichtung (101) durchführbar sind, die über das Teilnehmer-Identifizierungsmodul des Mobilfunkgeräts abgerechnet werden.

20. Kommunikationssystem nach einem der vorhergehenden Ansprüche, **dadurch gekennzeichnet, dass** auch bei aktivierter Rufumleitung von dem Mobilfunkgerät (118; 119) auf die Kommunikationseinrichtung (101) eine Gesprächsführung über das Mobilfunkgerät (118; 119) möglich ist, wobei ein Gesprächstransfer über die Kurzstreckenfunkverbindung erfolgt.

21. Kommunikationssystem nach einem der vorhergehenden Ansprüche, **dadurch gekennzeichnet, dass** die Rufumleitung automatisch deaktiviert wird, wenn das Mobilfunkgerät (118; 119) den Reichweitebereich der Kurzstrekkenfunkverbindung verlässt.

22. Kommunikationssystem nach einem der vorhergehenden Ansprüche, **dadurch gekennzeichnet, dass** es mehr als ein Mobilfunkgerät beinhaltet.

23. Verfahren zur Herstellung einer interaktiven Rufumleitung zwischen einem ersten und einem zweiten Mobilfunkgerät eines zellularen Mobilfunksystems, die jeweils eine Kurzstreckenfunkeinrichtung aufweisen, **gekennzeichnet durch** die Verfahrensschritte:
- Datenaustausch zwischen dem ersten und dem zweiten Mobilfunkgerät bei Eintritt des zweiten Mobilfunkgeräts in den Reichweitebereich der Kurzstreckenfunkeinrichtung des ersten Mobilfunkgeräts,
- Identifizierung und Autorisierung des zweiten Mobilfunkgeräts anhand der über die Kurzstreckenfunkverbindung ausgetauschten Daten,
- Herstellen einer Rufumleitung vom zweiten Mobilfunkgerät auf das erste Mobilfunkgerät innerhalb eines Mobilfunksystems der Mobilfunkgeräte.

24. Verfahren nach einem der vorhergehenden Ansprüche, **dadurch gekennzeichnet, dass** geprüft wird, ob eine Berechtigung für eine Rufumleitung vom zweiten Mobilfunkgerät auf das erste Mobilfunkgerät innerhalb des zellularen Mobilfunksystems registriert ist.

25. Verfahren nach einem der vorhergehenden Ansprüche, **dadurch gekennzeichnet, dass** innerhalb des zellularen Mobilfunksystems einmalig eine Berechtigung für eine Rufumleitung vom zweiten Mobilfunkgerät auf das erste Mobilfunkgerät hinterlegt wird.

26. Verfahren nach einem der vorhergehenden Ansprüche, **dadurch gekennzeichnet, dass** es sich bei dem zellularen Mobilfunksystem um ein System nach dem GSM- oder UMTS-Standard handelt.

27. Verfahren nach einem der vorhergehenden Ansprüche, **dadurch gekennzeichnet, dass** die Kurzstreckenfunkeinrichtungen nach dem Bluetooth-Standard arbeiten.

28. Verfahren nach einem der vorhergehenden Ansprüche, **dadurch gekennzeichnet, dass** die Mobilfunkgeräte ein Teilnehmer-Identifizierungsmodul enthalten.

29. Verfahren nach einem der vorhergehenden Ansprüche, **dadurch gekennzeichnet, dass** bei aktivierter Rufumleitung vom zweiten Mobilfunkgerät zum ersten Mobilfunkgerät Telefongespräche oder ein Datentransfer innerhalb des zellularen Mobilfunksystems über das erste Mobilfunkgerät durchführbar sind, wobei die Gebührenabrechnung der Mobilfunkverbindung über das Teilnehmeridentifizierungs-Modul des zweiten Mobilfunkgeräts erfolgt.

30. Verfahren nach einem der vorhergehenden Ansprüche, **dadurch gekennzeichnet, dass** auch bei aktivierter Rufumleitung vom zweiten Mobilfunkgerät auf das erste Mobilfunkgerät eine Gesprächsführung innerhalb des zellularen Mobilfunksystems möglich ist, wobei die Mobilfunkverbindung von dem ersten Mobilfunkgerät hergestellt wird und ein Gesprächstransfer zwischen dem ersten und dem zweiten Mobilfunkgerät über die Kurzstreckenfunkverbindung erfolgt.

31. Verfahren nach einem der vorhergehenden Ansprüche, **dadurch gekennzeichnet, dass** die Rufumleitung automatisch deaktiviert wird, wenn eine Kurzstreckenfunkverbindung zwischen dem ersten und dem zweiten Mobilfunkgerät nicht mehr herstellbar ist.

32. Verfahren nach einem der vorhergehenden Ansprüche, **dadurch gekennzeichnet, dass** das erste Mobilfunkgerät eine Serverfunktion übernimmt und eine Rufumleitung zwischen mehr als zwei Mobilfunkgeräten ermöglicht ist.

33. Verfahren nach einem der vorhergehenden Ansprüche, **dadurch gekennzeichnet, dass** eine Gesprächsübergabe / -nahme zwischen den Mobilfunkgeräten durchführbar ist.

34. Verfahren nach einem der vorhergehenden Ansprüche, **dadurch gekennzeichnet, dass** das erste Mobilfunkgerät Bestandteil eines Telematikgeräts eines Kraftfahrzeuges.

35. Verfahren nach einem der vorhergehenden Ansprüche, **dadurch gekennzeichnet, dass** das erste Mobilfunkgerät eine Freisprechfunktion beinhaltet.

## Claims

1. Communications device of a motor vehicle having an input unit (103) and an audio output unit (104-106) which are connected to a control unit (102), and a mobile radio module (108), connected to the control unit (102), of a cellular mobile radio system, where in which the communications device (101) has a short-range radio device which is connected to the control unit (102), the short-range radio device being configured to exchange data over a short-range radio link, **characterized in that** the communications device (101) has a comparator module for comparing data received over the short-range radio link with data stored in a storage element (112), and that it is possible to automatically set up a mobile radio link for transferring a status message within the mobile radio system when received and stored data correspond in terms of predefined features.

2. Communications device according to Claim 1, **characterized in that** the status message relates to a call diversion within the mobile radio system.

3. Communications device according to one of the preceding claims, **characterized in that** the communications device (101) contains a hands-free device.

4. Communications device according to one of the preceding claims, **characterized in that** the communications device (101) is a component of an audio system, of a multimedia system, of a telematics system or of a navigation system.

5. Communications device according to one of the preceding claims, **characterized in that** the cellular mobile radio system is a system according to the GSM or UMTS standard.

6. Communications device according to one of the preceding claims, **characterized in that** the range of the short-range radio link is not more than 100 m, preferably not more than 10 m.

7. Communications device according to one of the preceding claims, **characterized in that** the short-range radio device operates according to the Bluetooth standard.

8. Communications system having a communications device (101) which is integrated in a motor vehicle according to one of the preceding claims and having an external mobile radio device (118; 119) of a cellular mobile ratio system with a second short-range radio device, the comparator module of the communications device comparing data received from the mobile radio device (118; 119) over the short-range radio link with data stored in a storage element (112) of the communication device (101).

9. Communications system according to one of the preceding claims, **characterized in that** the status messages relates to a call diversion from the mobile radio device (118; 119) to the communications device (101).

10. Communications system according to one of the preceding claims, **characterized in that** an authorization for the call diversion of the mobile radio device (118; 119) to the communications device is stored in the cellular mobile radio system.

11. Communications system according to one of the preceding claims, **characterized in that** the communications device (101) has a hands-free function.

12. Communications system according to one of the preceding claims, **characterized in that** the cellular mobile radio system is a system according to the GSM or UMTS standard.

13. Communications system according to one of the preceding claims, **characterized in that** the range of the short-range radio link is not more than 100 m, preferably not more than 10 m.

14. Communications system according to one of the preceding claims, **characterized in that** the short-range radio device operates according to the Bluetooth standard.

15. Communications system according to one of the preceding claims, **characterized in that** the predefined features are a device identifier of the mobile radio device (118; 119).

16. Communications system according to one of the preceding claims, **characterized in that** the communications device (101) contains a chip card as a subscriber identification module (110) for the cellular mobile radio system.

17. Communications system according to one of the preceding claims, **characterized in that** the mobile radio device (118; 119) contains a chip card as a subscriber identification module for the cellular mobile radio system.

18. Communications system according to one of the preceding claims, **characterized in that** only services of the cellular mobile radio system which relate to the operation of the motor vehicle can be activated by means of the subscriber identification module (110) of the communications device (101).

19. Communications system according to one of the preceding claims, **characterized in that**, when the call diversion for the mobile radio device (118; 119) is activated, telephone calls or a data transfer can be carried out by means of the communications device (101) and are billed by means of the subscriber identification module of the mobile radio device.

20. Communications system according to one of the preceding claims, **characterized in that**, even when the call diversion from the mobile radio device (118; 119) to the communications device (101) is activated, it is possible to make a call via the mobile radio device (118; 119), a call transfer being made via the short-range radio link.

21. Communications system according to one of the preceding claims, **characterized in that** the call diversion is deactivated automatically if the mobile radio device (118; 119) leaves the range of the short-range radio link.

22. Communications system according to one of the preceding claims, **characterized in that** it contains more than one mobile radio device.

23. Method for setting up an interactive call diversion between a first and a second mobile radio device of a cellular mobile radio system, which each have a short-range radio device, **characterized by** the method steps:
- data is exchanged between the first and the second mobile radio device when the second mobile radio device enters the range of the short-range radio link of the first mobile radio device,
- the second mobile radio device is identified and authorized by means of the data which is exchanged via the short-range radio link,
- a call diversion is set up from the second mobile radio device to the first mobile radio device within a mobile radio system of the mobile radio device.

24. Method according to one of the preceding claims, **characterized in that** it is tested whether an authorization for a call diversion from the second mobile radio device to the first mobile radio device is registered within the cellular mobile radio system.

25. Method according to one of the preceding claims, **characterized in that** an authorization for a call diversion from the second mobile radio device to the first mobile radio device is stored once within the cellular mobile radio system.

26. Method according to one of the preceding claims, **characterized in that** the cellular mobile radio system is a system according to the GSM or UMTS standard.

27. Method according to one of the preceding claims, **characterized in that** the short-range radio device is operated according to the Bluetooth standard.

28. Method according to one of the preceding claims, **characterized in that** the mobile radio device is contained in a subscriber identification module.

29. Method according to one of the preceding claims, **characterized in that**, when the call diversion from the second mobile radio device to the first mobile radio device is activated, telephone calls or a data transfer can be carried out within the cellular mobile radio system via the first mobile radio device, the billing for the mobile radio link being carried out by means of the subscriber identification module of the second mobile radio device.

30. Method according to one of the preceding claims, **characterized in that**, even when the call diversion from the second mobile radio device to the first mobile radio device is activated, it is possible to make a call within the cellular mobile radio system, the mobile radio link being set up from the first mobile radio device and a call transfer being made between the first and the second mobile radio device via the short-range radio link.

31. Method according to one of the preceding claims, **characterized in that** the call diversion is deactivated automatically if a short-range radio link can no longer be set up between the first and the second mobile radio device.

32. Method according to one of the preceding claims, **characterized in that** the first mobile radio device performs a server function and a call diversion between more than two mobile radio devices is made possible.

33. Method according to one of the preceding claims, **characterized in that** a call transfer can be carried out between the mobile radio devices.

34. Method according to one of the preceding claims, **characterized in that** the first mobile radio device is a component of a telematics device of a motor vehicle.

35. Method according to one of the preceding claims, **characterized in that** the first mobile radio device contains a hands-free function.

## Revendications

1. Dispositif de communication pour automobile doté d'une unité d'entrée (103) et d'une unité de sortie acoustique (104-106) reliées à une unité de commande (102) ainsi que d'un module de radiocommunication mobile (108), relié à l'unité de commande (102), d'un système de radiocommunication mobile cellulaire, ledit dispositif de communication (101) comprenant un dispositif radio à courte distance relié à l'unité de commande (102), ledit dispositif radio à courte distance étant conçu pour l'échange de données via une liaison radio à courte distance, **caractérisé en ce que** le dispositif de communication (101) comprend un module de comparaison pour comparer des données reçues via la liaison radio à courte distance avec des données mémorisées dans un élément mémoire (112) et **en ce qu'**en cas de concordance des données reçues et mémorisées par rapport à des caractéristiques prédéfinies, une liaison de radiocommunication mobile pour la transmission d'un message d'état à l'intérieur d'un système de radiocommunication mobile peut être automatiquement établie.

2. Dispositif de communication selon la revendication 1, **caractérisé en ce que** le message d'état concerne un renvoi d'appel à l'intérieur du système de radiocommunication mobile.

3. Dispositif de communication selon l'une des revendications précédentes, **caractérisé en ce que** le dispositif de communication (101) comporte un dispositif mains-libres.

4. Dispositif de communication selon l'une des revendications précédentes, **caractérisé en ce que** le dispositif de communication (101) fait partie intégrante d'un système audio, d'un système multimédia, d'un système télématique ou d'un système de navigation.

5. Dispositif de communication selon l'une des revendications précédentes, **caractérisé en ce que** le système de radiocommunication mobile cellulaire est un système selon le standard GSM du standard UMTS.

6. Dispositif de communication selon l'une des revendications précédentes, **caractérisé en ce que** la portée de la liaison radio à courte distance ne dépasse pas 100 m, de préférence 10 m.

7. Dispositif de communication selon l'une des revendications précédentes, **caractérisé en ce que** le dispositif radio à courte distance fonctionne selon le standard Bluetooth.

8. Système de communication doté d'un dispositif de communication (101) intégré dans une automobile selon l'une des revendications précédentes, ainsi que d'un appareil mobile externe (118 ; 119) d'un système de radiocommunication mobile cellulaire, doté d'un deuxième dispositif radio à courte distance, le module de comparaison du dispositif de communication comparant les données reçues par l'appareil mobile (118 ; 119) via la liaison radio à courte distance avec des données mémorisées dans un élément mémoire (112) du dispositif de communication (101).

9. Système de communication selon l'une des revendications précédentes, **caractérisé en ce que** le message d'état concerne un renvoi d'appel de l'appareil mobile (118 ; 119) sur le dispositif de communication (101).

10. Système de communication selon l'une des revendications précédentes, **caractérisé en ce qu'**une autorisation de renvoi d'appel de l'appareil mobile (118 ; 119) sur le dispositif de communication est déposée dans le système de radiocommunication mobile cellulaire.

11. Système de communication selon l'une des revendications précédentes, **caractérisé en ce que** le dispositif de communication (101) comprend une fonction mains-libres.

12. Système de communication selon l'une des revendications précédentes, **caractérisé en ce que** le système de radiocommunication mobile cellulaire est un système selon le standard GSM du standard UMTS.

13. Système de communication selon l'une des revendications précédentes, **caractérisé en ce que** la portée de la liaison radio à courte distance ne dépasse pas 100 m, de préférence 10 m.

14. Système de communication selon l'une des revendications précédentes, **caractérisé en ce que** le dispositif radio à courte distance fonctionne selon le standard Bluetooth.

15. Système de communication selon l'une des revendications précédentes, **caractérisé en ce que** lesdites caractéristiques prédéfinies sont une identification d'appareil de l'appareil mobile (118 ; 119).

16. Système de communication selon l'une des revendications précédentes, **caractérisé en ce que** le dispositif de communication (101) comporte une carte à puce comme module d'identification d'abonné (110) pour le système de radiocommunication mobile cellulaire.

17. Système de communication selon l'une des revendications précédentes, **caractérisé en ce que** l'appareil mobile (118 ; 119) comporte une carte à puce comme module d'identification d'abonné pour le système de radiocommunication mobile cellulaire.

18. Système de communication selon l'une des revendications précédentes, **caractérisé en ce que** seuls les services relatifs au fonctionnement de l'automobile du système de radiocommunication mobile cellulaire sont activables par l'intermédiaire du module d'identification d'abonné (110) du dispositif de communication (101).

19. Système de communication selon l'une des revendications précédentes, **caractérisé en ce que** dans le cas d'une activation du renvoi d'appel pour l'appareil mobile (118 ; 119), des communications téléphoniques ou un transfert de données pourront être effectués par l'intermédiaire du dispositif de communication (101), le décompte étant fait par l'intermédiaire du module d'identification d'abonné de l'appareil mobile.

20. Système de communication selon l'une des revendications précédentes, **caractérisé en ce que** de même dans le cas d'une activation du renvoi d'appel de l'appareil mobile (118 ; 119) sur le dispositif de communication (101), une communication par l'intermédiaire de l'appareil mobile (118 ; 119) est possible, un transfert de communication s'effectuant alors via la liaison radio à courte distance.

21. Système de communication selon l'une des revendications précédentes, **caractérisé en ce que** le renvoi d'appel est automatiquement désactivé lorsque l'appareil mobile (118 ; 119) quitte la zone de couverture de la liaison radio à courte distance.

22. Système de communication selon l'une des revendications précédentes, **caractérisé en ce qu'**il comporte plus d'un appareil mobile.

23. Procédé de réalisation d'un renvoi d'appel interactif entre un premier et un deuxième appareil mobile d'un système de radiocommunication mobile cellulaire, présentant chacun un dispositif radio à courte distance, **caractérisé par** les étapes suivantes :
- échange de données entre le premier et le deuxième appareil mobile lorsque le deuxième appareil mobile entre dans la zone de couverture du dispositif radio à courte distance du premier appareil mobile,
- identification et autorisation du deuxième appareil mobile à l'aide des données échangées via la liaison radio à courte distance,
- réalisation d'un renvoi d'appel du deuxième appareil mobile sur le premier appareil mobile à l'intérieur d'un système de radiocommunication mobile des appareils mobiles.

24. Procédé selon l'une des revendications précédentes, **caractérisé en ce qu'**on vérifie si une autorisation pour un renvoi d'appel du deuxième appareil mobile sur le premier appareil mobile à l'intérieur du système de radiocommunication mobile cellulaire est enregistrée.

25. Procédé selon l'une des revendications précédentes, **caractérisé en ce qu'**on dépose à l'intérieur du système de radiocommunication mobile cellulaire, une fois, une autorisation pour un renvoi d'appel du deuxième appareil mobile sur le premier appareil mobile.

26. Procédé selon l'une des revendications précédentes, **caractérisé en ce que** le système de radiocommunication mobile cellulaire est un système selon le standard GSM ou UMTS.

27. Procédé selon l'une des revendications précédentes, **caractérisé en ce que** les dispositifs radio à courte distance fonctionnent selon le standard Bluetooth.

28. Procédé selon l'une des revendications précédentes, **caractérisé en ce que** les appareils mobiles comportent un module d'identification d'abonné.

29. Procédé selon l'une des revendications précédentes, **caractérisé en ce que** dans le cas d'une activation du renvoi d'appel du deuxième appareil mobile vers le premier l'appareil mobile, des communications téléphoniques ou un transfert de données à l'intérieur du système de radiocommunication mobile cellulaire pourront être effectués par l'intermédiaire du premier appareil mobile, le décompte des taxes de la liaison radio mobile se faisant par l'intermédiaire du module d'identification d'abonné du deuxième appareil mobile.

30. Procédé selon l'une des revendications précédentes, **caractérisé en ce que** de même dans le cas d'une activation du renvoi d'appel du deuxième appareil mobile sur le premier appareil mobile, une communication à l'intérieur du système de radiocommunication mobile cellulaire est possible, la liaison radio mobile étant alors établie par le premier appareil mobile et un transfert de communication entre le premier et le deuxième appareil mobile s'effectuant via la liaison radio à courte distance.

31. Procédé selon l'une des revendications précédentes, **caractérisé en ce que** le renvoi d'appel est automatiquement désactivé lorsqu'une liaison radio à courte distance entre le premier et le deuxième appareil mobile ne peut plus être établie.

32. Procédé selon l'une des revendications précédentes, **caractérisé en ce que** le premier appareil mobile prend en charge une fonction de serveur et qu'un renvoi d'appel entre plus de deux appareils mobiles est possible.

33. Procédé selon l'une des revendications précédentes, **caractérisé en ce qu'**un transfert / une réception de communication entre les appareils mobiles est réalisable.

34. Procédé selon l'une des revendications précédentes, **caractérisé en ce que** le premier appareil mobile fait partie intégrante d'un appareil télématique pour automobile.

35. Procédé selon l'une des revendications précédentes, **caractérisé en ce que** le premier appareil mobile comporte une fonction mains-libres.
